# EUROPEAN PATENT SPECIFICATION

(11) **EP 2 471 421 B1**
(45) Date of publication and mention of the grant of the patent: **26.08.2015**
(21) Application number: 11196273.4
(22) Date of filing: 30.12.2011
(51) Int. Cl.: A47J 31/40, A47J 31/54

(54) **Method and machine for producing beverages from soluble material**
Verfahren und Maschine zur Herstellung von Getränken aus löslichem Material
Procédé et machine pour la production de boissons à partir d'un matériau soluble

(30) Priority: 30.12.2010 IT TO20101087
(43) Date of publication of application: 04.07.2012
(73) Proprietor: SGL Italia S.r.l. con unico socio, 10156 Torino (TO) (IT)
(72) Inventor: Bertolina, Andrea, 14048 MONTEGROSSO D'ASTI (IT); Gambaudo, Gian Mauro, 14049 NIZZA MONFERRATO (IT)
(74) Representative: Bergadano, Mirko

(56) References cited:
- EP-A1- 1 764 014
- EP-A2- 1 460 353
- WO-A1-99/51947
- US-A1- 2010 266 740

## Description

The present invention relates to a method and machine for producing beverages from soluble material.

More specifically, the present invention relates to producing beverages from soluble material using a machine of the type comprising at least one mixing device fed with hot water and soluble material; and a feed unit comprising a water tank, pump, and water heating means.

Producing beverages from soluble material using a machine of the above type poses numerous problems, on account of the machine having to be equipped with a water heating system capable of :
- producing roughly 150 ml of beverage in roughly 7-10 seconds, and a predetermined mixing temperature of roughly 80°C; and
- delivering hot water at a temperature which at no time, and particularly at the initial delivery stage, exceeds boiling point, which would result in improper mixing by forming steam bubbles in the water flow to the mixing device.

The usual solution in known machines of this type is to employ a hot-water feed unit comprising a 'storage' boiler. This consists of a relatively large container filled with water and fitted with heating devices controlled to keep all the water in the container at a constant, relatively high operating or mixing temperature.

The feed unit also comprises a pump assembly downstream from the boiler, and which, when a hot beverage is selected by the user, is activated to draw a given amount of hot water from the boiler and feed it, within a given time, to the mixing device, which is supplied at the same time with a measure of one or more soluble powdered materials.

Using a 'storage' boiler has several drawbacks, mainly due to its size, and to it being relatively energy-intensive, by having to heat, and keep hot, a relatively large amount of water.

One proposed solution to the problem is to replace the boiler with a thermoblock.

Here and hereinafter, the term 'thermoblock' is intended to mean a known heating device comprising a water conduit normally in the form of a stainless steel tube coil embedded in a die-cast aluminium plate, together with a heating element normally in the form of a shielded electric resistor.

To make a beverage, the thermoblock is maintained at a given standby temperature higher than the mixing temperature; and, when the beverage is selected by the user, a pump assembly - in this case, located upstream from the thermoblock and comprising one or a number of parallel pumps - draws a given amount of water from a cold-water tank, and feeds it through the thermoblock, which releases heat to and heats the water almost instantly. To keep the heated water as close as possible to the target mixing temperature, the thermoblock is normally equipped with a feedback control, which, depending on the temperature of the water at the thermoblock outlet, turns the heating element on and off to control the temperature of the thermoblock and compensate for any fall in temperature caused by the water flowing through it.

This is an effective solution which is still widely used in espresso coffee machines requiring a relatively small amount - normally about 30 ml - of roughly 90°C infusion water in the space of about 7-10 seconds. This can be done using low-power heating elements of about 1 kW, i.e. of low thermal inertia and which are easily controllable. Moreover, unlike machines feeding hot water to a mixer, water mixed with steam at any stage in the water delivery process is of no importance in a coffee machine, seeing as the steam is never hot enough to scorch the ground coffee.

Though theoretically feasible, applying thermoblocks to blended beverage making machines has not proved so successful, and in fact has revealed drawbacks that actually discourage their use.

This is mainly due to blended beverages normally requiring, as stated, about 150 ml of water, i.e. much more than the 30 ml required for espresso coffee. Which means a thermoblock of the type commonly used in coffee machines would not be powerful enough to heat such a large amount of water to mixing temperature at the same relatively high feed rate.

Using a higher-power thermoblock, on the other hand, poses other problems :
- firstly, a sharp increase in temperature of the lead water through the thermoblock, thus possibly resulting in the formation of steam bubbles; and
- secondly, proportionally high thermal inertia, making the thermoblock hard to control.

The solution, applied to a coffee machine and described in US 2010/0266740, of using two series thermoblocks - one low-power to heat the water to roughly 35-55°C, and the other much more powerful, to heat the water to close to boiling point - has also proved totally incapable of delivering 150 ml, as opposed to 30 ml, in roughly 7-10 seconds. In this case, in fact, the temperature of the water from the first thermoblock would settle, halfway through delivery, at a temperature of barely 5-7°C higher than the water in the tank. Which means that, to ensure all the water is delivered at a temperature of 85-90°C, the second thermoblock would have to be over 200 watts, and of such thermal inertia as to be unable to produce 85-90°C water without producing steam bubbles.

It is an object of the present invention to provide a method and machine for producing beverages from soluble material, designed to provide an effective, simple, low-cost solution to the above drawbacks.

According to the present invention, there is provided a method of producing brewed beverages, as claimed in Claim 1 and preferably in any one of the Claims depending directly or indirectly on Claim 1.

According to the present invention, there is also provided a machine for producing brewed beverages, as claimed in Claim 6 and preferably in any one of the Claims depending directly or indirectly on Claim 6.

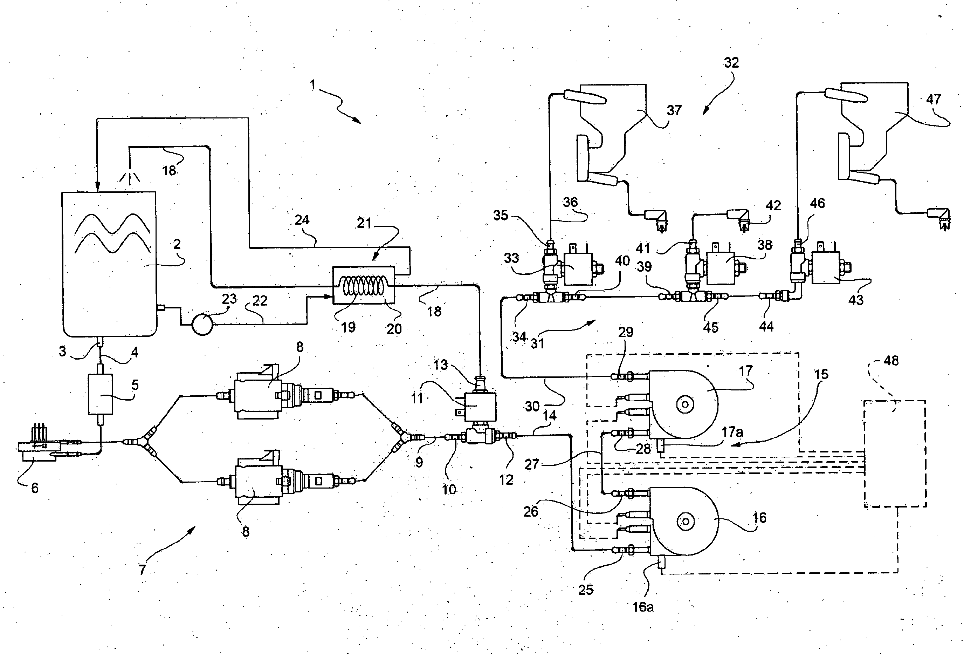

The invention will now be described with reference to the attached drawing showing a schematic of a preferred nonlimiting embodiment.

Number 1 in the attached drawing indicates as a whole a machine for producing brewed beverages.

Machine 1 comprises, among other things, a water tank 2 with a bottom outlet 3, which communicates with the inside of tanks 2 via a known valve (not shown), and is connected, by a conduit 4 extending through a filter 5 and a known volume meter 6, to the inlet of a pump assembly 7 comprising two parallel, preferably electromagnetic pumps 8 (or one pump 8).

The delivery of pump assembly 7 is connected by a conduit 9 to the inlet 10 of a three-way solenoid valve 11 having two outlets 12 and 13, and which assumes a first position to connect inlet 10 to outlet 12, and a second position to connect inlet 10 to outlet 13. Outlet 12 is connected by a conduit 14 to a heating unit 15 comprising two thermoblocks 16 and 17 arranged successively in series in the water flow direction from pump assembly 7; and outlet 13 is connected to tank 2 by a drain conduit 18.

Conduit 18 comprises an intermediate portion defined by a coil 19 extending inside a casing 20 of a heat exchanger 21. And casing 20 has an inlet conduit 22 connecting casing 20 to tank 2 via a pump 23; and an outlet conduit 24 also connecting casing 20 to tank 2.

Thermoblock 16 has an inlet 25 forming the inlet of heating unit 15 and connected to conduit 14; and an outlet 26 connected by a conduit 27 to an inlet 28 of thermoblock 17. Likewise, thermoblock 17 has an outlet 29 forming the outlet of heating unit 15 and connected to a conduit 30 for feeding hot water to a valve assembly 31 for distributing hot water to a mixing unit 32.

Valve assembly 31 comprises a solenoid valve 33, an inlet 34 of which is connected to an intermediate point along feed conduit 30, and an outlet 35 of which is connected by a conduit 36 to a known mixing device 37, which forms part of mixing unit 32 and is associated with a respective known soluble material feed device (not shown).

Valve assembly 31 also comprises a solenoid valve 38 having an inlet 39 connected to a further outlet 40 of solenoid valve 33, and an outlet 41 connected to a hot-water dispenser 42.

Valve assembly 31 also comprises a solenoid valve 43 having an inlet 44 connected to a further outlet 45 of solenoid valve 38, and an outlet 46 connected to a further mixing device 47, which is similar to mixing device 37, has a respective known soluble material feed device (not shown), and also forms part of mixing unit 32.

Solenoid valves 33, 38 and 43 are controlled, in use, to selectively connect mixing devices 37 and 47 to heating unit 15, depending on the selected beverage.

In a variation not shown, mixing unit 32 comprises one mixing device 37 or 47, or further mixing devices connected to one another and to mixing devices 37 and 47, and each having a respective solenoid valve, similar to solenoid valve 33 or 43, for selectively activating one or other of the mixing devices.

Thermoblocks 16 and 17 are of comparable power and of the type commonly used in espresso coffee or similar machines. More specifically, each thermoblock 16, 17 has a roughly 1000-1200 watt resistor R1, R2, i.e. capable of heating the water to the 85-90°C target temperature on its own at the initial delivery stage.

Heating unit 15 has a temperature control system for uniformly heating water flow through thermoblocks 16 and 17. In other words, thermoblocks 16 and 17 are temperature controlled so that, during delivery, i.e. the roughly 7-10-second time period in which the amount of water corresponding to each delivery - normally about 150 ml - flows through heating unit 15, all the water in the delivery is substantially at the same temperature, equal to a given target mixing temperature.

To effectively and accurately control the water temperature, thermoblocks 16 and 17 are controlled by activating and deactivating resistors R1 and R2 independently of each other, to produce variable, complementary increases in water temperature with respect to a given target mixing temperature.

More specifically, thermoblock 16 has a thermostat 16a set to keep thermoblock 16, prior to delivery, at a given standby, i.e. no-load, temperature of around 100°C, whereas, prior to delivery, thermoblock 17 is idle.

At the initial delivery stage, the fall in temperature caused by water flowing through thermoblock 16 activates electric resistor R1 substantially instantly. Electric resistor R1 remains activated throughout delivery, in that thermoblock 16, given the relatively low power of resistor R1, heats the lead water to a temperature T1 (outflow temperature from thermoblock 16) possibly higher than the target mixing temperature, but is unable to compensate for the heat withdrawn from the water flowing through it, and the heat withdrawn from the idle thermoblock 17, and so prevent the temperature T2 of the water from thermoblock 17 from falling gradually below the target mixing temperature.

In other words, thermoblock 17 is supplied with water whose temperature T1 decreases rapidly from an initial temperature, possibly higher than the target mixing temperature, to temperatures below the target mixing temperature but still below boiling temperature.

Thermoblock 17 has a probe 17a, preferably a PTC or NTC thermistor, which measures the temperature T2 of the water from thermoblock 17, and forms part, together with thermostat 16a, of an electric circuit comprising a central control unit 48 connected to volume meter 6 to control, not only heating unit 15, but also pump assembly 7 and operation of all the solenoid valves described.

When the temperature T2 measured by probe 17a falls below the target mixing temperature during delivery, central control unit 48 turns on resistor R2 of thermoblock 17 (normally intermittently) to produce in the water a temperature gradient T2-T1, which varies over the delivery period, and, at each instant and with respect to the target mixing temperature, is complementary to the temperature gradient produced by thermoblock 16, to maintain a constant temperature T2 equal to the target mixing temperature.

Obviously, if temperature T2 rises above the target mixing temperature, central control unit 48 immediately turns off electric resistor R2 of thermoblock 17. This may be done with substantially no consequences, given the small amount of power necessary to produce temperature gradient T2-T1, and therefore the low thermal inertia of thermoblock 17, the effects of which are easily predictable and controllable.

In actual fact, thermoblock 17 is substantially the same power as thermoblock 16, and is powerful enough to heat the water, during delivery, to the target mixing temperature with no risk of overheating capable of producing steam bubbles. Such a risk would exist, on the other hand, if, as opposed to two series thermoblocks 16 and 17, a single, much more powerful thermoblock, equal, for example, to the total power of thermoblocks 16 and 17, were to be used, or if the power of thermoblock 16 were so low as to be practically ineffective at the advanced delivery stage, so compensation would require a high-power thermoblock 17 equal to the total power of thermoblocks 16 and 17.

Once the beverage is dispensed, pump assembly 7 is deactivated, inlet 34 of valve assembly 31 and inlet 10 of solenoid valve 11 are closed, outlets 12 and 13 of solenoid valve 11 are connected to each other, and heating unit 15 is connected to tank 2 by conduit 18 to drain and prevent scale forming in thermoblocks 16 and 17.

Given the thermal inertia of heating unit 15, the backflow from thermoblocks 16 and 17 is normally at a temperature above 100°C, and normally comprises a mixture of water and steam, which, if drained, untreated, directly into tank 2, would produce a large amount of steam. This is prevented by cooling the mixture along conduit 18 by means of heat exchanger 21.

Heat exchanger 21, conduits 22 and 24, and pump 23 are generally designed so that water is fed to tank 2 along conduit 18 at a temperature of 35-40°C, and along outlet conduit 24 at a temperature of roughly 30°C. This serves the dual purpose of preventing steam formation, and increasing the temperature of the water inside tank 2. This increase of temperature is normally by a few degrees so as to prevent bacteria spreading inside tank 2, and to provide energy-saving assistance to thermoblocks 16 and 17.

In a variation not shown, tank 2 is replaced with a known float tank connected to the water mains.

## Claims

1. A method of producing beverages from soluble material and by means of a mixing device (37; 47) fed with soluble material and hot water at a target mixing temperature of 85-90°C; the method comprising the steps of :
- providing a machine (1) comprising water storage means (2); water heating means (15); and a pump assembly (7) designed to deliver a given, amount of beverage-making water within a given delivery time; the water heating means, (15) comprising a first and second thermoblock (16, 17) arranged successively in series along a water feeding path; and the first thermoblock (16) being capable of heating the water to the target mixing temperature on its own at the start of the given delivery, time;
- keeping the first thermoblock (16) at a given standby, i.e. no-load, temperature of around 100°C;
- activating the pump assembly (7) for the given delivery time;
- first heating the water using only the first thermoblock (16); and
- monitoring the temperature of the water from the first and second thermoblock (16, 17) continuously throughout the delivery time, to only activate the second thermoblock (17) to compensate for any temperature drop in the water from the first thermoblock (16), and maintain the temperature of the water from the second thermoblock (17) equal to the target mixing temperature throughout the delivery time.

2. A method as claimed in Claim 1, wherein each thermoblock (16; 17) has a power of roughly 1000-1200 watts.

3. A method as claimed in Claim 1 or 2, wherein said given amount of water is roughly 150 ml.

4. A method as claimed in one of the foregoing Claims, wherein the given delivery time is 7-10 seconds.

5. A method as claimed in one of the foregoing Claims, and comprising the further steps of :
- draining the thermoblocks (16, 17) into the storage means (2) along a drain conduit (18) when delivery is completed; and
- cooling the drain conduit (18) with water drawn from and subsequently fed back into the storage means (2).

6. A machine for producing beverages from soluble material, the machine (1) comprising at least one mixing device (37; 47) fed with hot water and soluble material; water storage means (2); water heating means (15); and.a pump assembly (7) designed to supply the heating means (15) with a given amount of beverage-making water within a given delivery time; the machine (1) being **characterized in that** the heating means (15) comprise a first and second thermoblock (16, 17) arranged successively in series along a water feeding path, and having respective heating devices (R1, R2) of comparable power to impart respective temperature increases to the water; each heating device (R1; R2) being capable of heating the water to a target mixing temperature of 85-90°C on its own at the start of the given delivery time; and control means (16a, 17a, 48) being provided to continuously maintain said temperature increases, throughout the given delivery time, complimentary to each other with respect to the target mixing temperature.

7. A machine as claimed in Claim 6, wherein each heating device (R1, R2) has a power of about 1000-1200 watts.

8. A machine as claimed in Claim 6 or 7, wherein said given amount of water is roughly 150 ml.

9. A machine as claimed in one of Claims 6 to 8, wherein the given delivery time is 7-10 seconds.

10. A machine as claimed in one of Claims 6 to 9, wherein, for said first thermoblock (16), said control means (16a, 17a, 48) comprise a thermostat (16a).

11. A machine as claimed in Claim 10, wherein the thermostat (16a) is set to keep the first thermoblock (16) at a given standby, i.e. no-load, temperature of around 100°C.

12. A machine as claimed in one of Claims 6 to 11, wherein, for said second thermoblock (17), said control means (16a, 17a) comprise a probe (17a) which feedback is arranged for measuring the temperature of the water from the second thermoblock (17).

13. A machine as claimed in one of Claims 6 to 12, wherein the heating means (15) comprise an inlet (25); the machine (1) comprising a heat exchanger (21), and a drain conduit (18) connecting said inlet to the storage means (2) and extending through the heat exchanger (21).

14. A machine as claimed in Claim 13, wherein the heat exchanger (21) comprises a casing (20) for a heat exchange fluid; the casing (20) being traversed by the drain conduit (18).

15. A machine as claimed in Claim 14, wherein the heat exchange fluid is water drawn from and fed back into the storage means (2).

## Patentansprüche

1. Verfahren zum Herstellen von Getränken aus löslichem Material und mithilfe einer Mixvorrichtung (37, 47), der lösliches Material und heißes Wasser bei einer Sollmixtemperatur von 85 bis 90°C zugeführt wird, wobei das Verfahren die Schritte aufweist:
- Bereitstellen einer Maschine (1), die ein Wasserspeichermittel (2), ein Wasserheizmittel (15) und eine Pumpenanordnung (7), die dafür bestimmt ist, eine vorgegebene Menge an Wasser für die Getränkezubereitung innerhalb einer vorgegebenen Abgabezeit abzugeben, aufweist, wobei das Wasserheizmittel (15) einen ersten und einen zweiten Thermoblock (16, 17) aufweist, die nacheinander in Reihe entlang einer Wasserzuführbahn angeordnet sind, und wobei der erste Thermoblock (16) selbstständig das Wasser auf die Sollmixtemperatur zu Beginn der vorgegebenen Abgabezeit erwärmen kann;
- Halten des ersten Thermoblocks (16) in einem vorgegebenen Bereitschaftsmodus, das heißt ohne Last und bei einer Temperatur von ungefähr 100°C;
- Aktivieren der Pumpenanordnung (7) über die vorgegebene Abgabezeit;
- anfängliches Erwärmen des Wassers unter Verwendung von lediglich des ersten Thermoblocks (16); und
- Überwachen der Temperatur des Wassers von dem ersten und dem zweiten Thermoblock (16, 17) kontinuierlich über die Abgabezeit und Aktivieren des zweiten Thermoblocks (17), um einen Temperaturabfall des Wassers von dem ersten Thermoblock (16) zu kompensieren und die Temperatur des Wassers von dem zweiten Thermoblock (17) bei der Sollmixtemperatur über die Abgabezeit zu halten.

2. Verfahren nach Anspruch 1, wobei jeder Thermoblock (16, 17) eine Leistung von ungefähr 1000 - 1200 W besitzt.

3. Verfahren nach Anspruch 1 oder 2, wobei die vorgegebene Menge an Wasser ungefähr 150 ml beträgt.

4. Verfahren nach einem der vorhergehenden Ansprüche, wobei die vorgegebene Abgabezeit 7 bis 10 s beträgt.

5. Verfahren nach einem der vorhergehenden Ansprüche, und des Weiteren aufweisend die Schritte:
- Entleeren der Thermoblocks (16, 17) in das Speichermittel (2) entlang einer Abflussleitung (18), wenn die Abgabe beendet ist; und
- Kühlen der Abflussleitung (18) mit Wasser, das von dem Speichermittel (2) entzogen und anschließend wieder zurück in das Speichermittel (2) geführt wird.

6. Maschine zum Herstellen von Getränken aus lösbarem Material, wobei die Maschine (1) zumindest eine Mixvorrichtung (37, 47), der heißes Wasser und lösbares Material zugeführt wird, ein Wasserspeichermittel (2), ein Wasserheizmittel (15) und eine Pumpenanordnung (7), die dafür bestimmt ist, dem Heizmittel (15) eine vorgegebene Menge an Wasser für die Getränkezubereitung innerhalb einer vorgegebenen Abgabezeit zuzuführen, aufweist, wobei die Maschine (1) **dadurch gekennzeichnet ist, dass** das Heizmittel (15) einen ersten und einen zweiten Thermoblock (16, 17) aufweist, die nacheinander in Reihe entlang einer Wasserzuführbahn angeordnet sind und jeweilige Heizvorrichtungen (R1, R2) von vergleichbarer Leistung besitzen, um eine jeweilige Temperaturerhöhung des Wassers herbeizuführen, wobei jede Heizvorrichtung (R1, R2) selbstständig das Wasser auf eine Sollmixtemperatur von 85 bis 90°C zu Beginn der vorgegebenen Abgabezeit erwärmen kann, und dass ein Steuermittel (16a, 17a, 48) vorgesehen ist, um kontinuierlich die Temperaturzunahmen über die vorgegebene Abgabezeit komplementär zueinander in Bezug auf die Sollmixtemperatur zu halten.

7. Maschine nach Anspruch 6, wobei jede Heizvorrichtung (R1, R2) eine Leistung von ungefähr 1000 - 1200 W besitzt.

8. Maschine nach Anspruch 6 oder 7, wobei die vorgegebene Menge an Wasser ungefähr 150 ml beträgt.

9. Maschine nach einem der Ansprüche 6 bis 8, wobei die vorgegebene Abgabezeit 7 bis 10 s beträgt.

10. Maschine nach einem der Ansprüche 6 bis 9, wobei das Steuermittel (16a, 17a, 48) für den ersten Thermoblock (16) einen Thermostat (16a) aufweist.

11. Maschine nach Anspruch 10, wobei der Thermostat (16a) so eingestellt ist, dass er den ersten Thermoblock (16) in einem vorgegebenen Bereitschaftsmodus hält, das heißt ohne Last und bei einer Temperatur von ungefähr 100°C.

12. Maschine nach einem der Ansprüche 6 bis 11, wobei das Steuermittel (16a, 17a) für den zweiten Thermoblock (17) eine Probe (17a) aufweist, dessen Rückkopplung so angeordnet ist, dass sie die Temperatur des Wassers von dem zweiten Thermoblock (17) misst.

13. Maschine nach einem der Ansprüche 6 bis 12, wobei das Heizmittel (15) einen Einlass (25) aufweist, und wobei die Maschine (1) einen Wärmetauscher (21) und eine Abflussleitung (18) aufweist, die den Einlass mit dem Speichermittel (2) verbindet und sich durch den Wärmetauscher (21) erstreckt.

14. Maschine nach Anspruch 13, wobei der Wärmetauscher (21) ein Gehäuse (20) für ein Wärmetauscherfluid aufweist, und wobei das Gehäuse (20) von der Abflussleitung (18) durchquert wird.

15. Maschine nach Anspruch 14, wobei das Wärmetauscherfluid Wasser ist, das aus dem Speichermittel (2) entnommen und in dieses zurückgeführt wird.

## Revendications

1. Procédé pour produire des boissons à partir d'une matière soluble et au moyen d'un dispositif de mélange (37 ; 47) alimenté avec la matière soluble et de l'eau chaude à une température de mélange cible de 85-90°C ; le procédé comprenant les étapes consistant à :
prévoir une machine (1) comprenant des moyens de stockage d'eau (2) ; des moyens de chauffage d'eau (15) ; et un ensemble de pompe (7) conçu pour distribuer une quantité donnée d'eau de production de boisson dans un temps de distribution donné ; les moyens de chauffage d'eau (15) comprenant un premier et un second bloc thermique (16, 17) agencés successivement en série le long d'une trajectoire d'alimentation en eau ; et le premier bloc thermique (16) étant capable de chauffer de lui-même l'eau à la température de mélange cible au démarrage du temps de distribution donné ;
maintenir le premier bloc thermique (16) à une température d'attente donnée, c'est-à-dire sans charge, d'environ 100°C,
activer un ensemble de pompe (7) pendant le temps de distribution donné ;
chauffer tout d'abord, l'eau en utilisant uniquement le premier bloc thermique (16) ; et
surveiller la température de l'eau à partir du premier et du second bloc thermique (16, 17) de manière continue tout au long du temps de distribution, pour activer uniquement le second bloc thermique (17) afin de compenser toute chute de température dans l'eau du premier bloc thermique (16) et maintenir la température de l'eau du second bloc thermique (17) égale à la température de mélange cible tout au long du temps de distribution.

2. Procédé selon la revendication 1, dans lequel chaque bloc thermique (16 ; 17) a une puissance d'approximativement 1000-1200 watts.

3. Procédé selon la revendication 1 ou 2, dans lequel ladite quantité donnée d'eau est d'approximativement 150 ml.

4. Procédé selon l'une des revendications précédentes, dans lequel le temps de distribution donné est de 7 à 10 secondes.

5. Procédé selon l'une des revendications précédentes, et comprenant les étapes supplémentaires consistant à :
vider les blocs thermiques (16, 17) dans les moyens de stockage (2) le long d'un conduit de drain (18) lorsque la distribution est terminée ; et
refroidir le conduit de drain (18) avec l'eau retirée et successivement ramenée dans les moyens de stockage (2).

6. Machine pour produire des boissons à partir d'une matière soluble, la machine (1) comprenant au moins un dispositif de mélange (37 ; 47) alimenté avec de l'eau chaude et une matière soluble ; des moyens de stockage d'eau (2) ; des moyens de chauffage d'eau (15) ; et un ensemble de pompe (7) conçu pour fournir aux moyens de chauffage (15) une quantité donnée d'eau de production de boisson dans un temps de distribution donné ; la machine (1) étant **caractérisée en ce que** les moyens de chauffage (15) comprennent un premier et un second bloc thermique (16, 17) agencés successivement en série le long d'une trajectoire d'alimentation en eau, et ayant des dispositifs de chauffage (R1, R2) respectifs de puissance comparable pour communiquer des augmentations de température respectives à l'eau ; chaque dispositif de chauffage (R1 ; R2) étant capable de chauffer de lui-même l'eau à une température de mélange cible de 85-90°C au démarrage du temps de distribution donné ; et des moyens de commande (16a, 17a, 48) étant prévus pour maintenir en continu lesdites augmentations de température, tout au long du temps de distribution donné, de manière complémentaire entre elles par rapport à la température de mélange cible.

7. Machine selon la revendication 6, dans laquelle chaque dispositif de chauffage (R1, R2) a une puissance d'environ 1000-1200 watts.

8. Machine selon la revendication 6 ou 7, dans laquelle ladite quantité donnée d'eau est d'approximativement 150 ml.

9. Machine selon l'une des revendications 6 à 8, dans laquelle le temps de distribution donné est de 7-10 secondes.

10. Machine selon l'une des revendications 6 à 9, dans laquelle, pour ledit premier bloc thermique (16), lesdits moyens de commande (16a, 17a, 48) comprennent un thermostat (16a).

11. Machine selon la revendication 10, dans laquelle le thermostat (16a) est réglé pour maintenir le premier bloc thermique (16) à une température d'attente donnée, c'est-à-dire sans charge, d'environ 100°C.

12. Machine selon l'une des revendications 6 à 11, dans laquelle, pour ledit second bloc thermique (17), lesdits moyens de commande (16a, 17a) comprennent une sonde (17a) qui est agencée pour mesurer, par rétroaction, la température de l'eau à partir du premier bloc thermique (17).

13. Machine selon l'une des revendications 6 à 12, dans laquelle les moyens de chauffage (15) comprennent une entrée (25) ; la machine (1) comprenant un échangeur de chaleur (21), et un conduit de drain (18) raccordant ladite entrée aux moyens de stockage (2) et s'étendant à travers l'échangeur de chaleur (21).

14. Machine selon la revendication 13, dans laquelle l'échangeur de chaleur (21) comprend un boîtier (20) pour un fluide d'échange thermique ; le boîtier (20) étant traversé par le conduit de drain (18).

15. Machine selon la revendication 14, dans laquelle le fluide d'échange de chaleur est de l'eau retirée et ramenée dans les moyens de stockage (2).
